# FASCICULE DE BREVET EUROPEEN

(11) **EP 2 767 458 B1**
(45) Date de publication et mention de la délivrance du brevet: **14.10.2015**
(21) Numéro de dépôt: 14151762.3
(22) Date de dépôt: 20.01.2014
(51) Int. Cl.: B62D 25/08, B62D 25/20, B62D 29/00

(54) **Plancher arrière de charge pour véhicule automobile, comportant un longeronnet renforcé**
Gepäckraumboden für PKW, mit einem träger
Floor of rear luggage compartment for a motor vehicle, comprising a reinforced beam

(30) Priorité: 14.02.2013 FR 1351258
(43) Date de publication de la demande: 20.08.2014
(73) Titulaire: PEUGEOT CITROËN AUTOMOBILES SA, 78140 Vélizy-Villacoublay (FR)
(72) Inventeur: Boileau, Cyril, 25250 GENEY (FR); Nithart, David, 90400 VEZELOIS (FR)

(56) Documents cités:
- EP-A1- 1 921 000
- EP-A2- 0 298 903
- DE-A1-102005 024 265
- US-A- 5 992 926

## Description

La présente invention concerne un plancher arrière de charge pour véhicule automobile, ce plancher étant en matière plastique ou en matière composite.

L'invention concerne également un véhicule automobile comportant un tel plancher de charge et en particulier un véhicule automobile dans lequel le plancher arrière supporte une troisième rangée de sièges.

Actuellement, le plancher arrière des véhicules automobiles, destiné à supporter une troisième rangée de sièges est en tôle d'acier.

De plus, ce plancher comporte un longeronnet également en tôle d'acier, de section en U s'étendant au milieu du plancher dans le sens longitudinal du véhicule.

En outre, les extrémités des deux ailes latérales du U formé par le longeronnet sont soudées au plancher. Un tel plancher est connu du document DE 10 2005 024 265 A1.

Une partie des sièges de la troisième rangée est fixée sur le longeronnet.

La réglementation en vigueur pour les chocs arrière vise à assurer la protection des occupants des véhicules.

A cet effet, les véhicules subissent un test normalisé dans lequel une barrière déformable ou un mur rigide vient impacter à grande vitesse l'arrière d'un véhicule complet avec ses occupants.

Lors d'un tel choc, la vie des occupants y compris ceux de la troisième rangée de sièges doit être préservée.

Les véhicules doivent également satisfaire à la réglementation européenne ECE 14 qui vise à garantir la tenue des ancrages des sièges et des ceintures de sécurité.

A cet effet, les ceintures d'une même rangée de sièges sont soumises à une traction exercée par des vérins.

L'essai normalisé est réalisé sur un banc spécial sur une caisse « nue » équipée de ses sièges et ceintures.

L'inconvénient majeur des planchers actuels est leur masse élevée.

La tendance actuelle est de remplacer la tôle d'acier du plancher arrière par des matériaux de faible densité tels que la matière plastique ou composite.

Toutefois, de tels planchers ne présentent pas des caractéristiques suffisantes pour satisfaire à la réglementation évoquée plus haut, même lorsqu'ils sont renforcés par un longeronnet métallique.

Le but de la présente invention est de remédier à cet inconvénient.

Ce but est atteint, selon l'invention, grâce à un plancher arrière de charge pour véhicule automobile, ce plancher étant réalisé en matière plastique ou en matière composite et comportant un longeronnet métallique de section transversale en U s'étendant au milieu du plancher dans le sens longitudinal du véhicule, les extrémités des deux ailes latérales du U formé par le longeronnet étant reliées au plancher, caractérisé en ce que la partie arrière dudit longeronnet est renforcée par un insert métallique de section transversale en U, engagé et fixé à l'intérieur ou sur l'extérieur du U formé par ledit longeronnet, cette partie arrière du longeronnet et/ou ledit insert métallique comportant une série d'encoches.

Ainsi, l'insert métallique renforce la partie arrière du longeronnet, ce qui permet de garantir la tenue des ancrages des sièges y compris ceux de la troisième rangée et les ancrages des ceintures et de ce fait de répondre aux exigences de la réglementation ECE 14.

De plus, les encoches réalisées sur l'insert et/ou la partie arrière du longeronnet permettent à cet ensemble de se déformer axialement en cas de choc arrière et de ce fait d'absorber l'énergie du choc, ce qui permet au véhicule de satisfaire à la réglementation concernant les chocs arrière à grande vitesse.

De plus, l'ajout de l'insert métallique à l'arrière du longeronnet n'augmente pas significativement la masse de ce longeronnet.

Ainsi, la masse totale de l'ensemble plancher et longeronnet peut être nettement plus faible qu'un ensemble entièrement en tôle d'acier.

Dans une version préférée de l'invention, chacune des ailes latérales du U formé par l'insert métallique est fixée au moyen de points de soudure à l'une des ailes latérales du U formé par le longeronnet.

De préférence également :
- le U formé par l'insert est ouvert dans la même direction que le U formé par le longeronnet ;
- le fond du U formé par l'insert est espacé du fond du U formé par le longeronnet.

Dans un mode de réalisation particulièrement avantageux de l'invention, la partie arrière du longeronnet comporte une série d'encoches espacées réalisées sur chacun des deux plis situés entre une aile latérale du U formé par le longeronnet et le fond de celui-ci.

De même, ledit insert métallique comporte, de préférence, sur toute sa longueur une série d'encoches espacées réalisées sur chacun des deux plis situés entre une aile latérale du U formé par l'insert et le fond de celui-ci.

Ces encoches permettent à la partie arrière du longeronnet de se déformer régulièrement en cas de choc arrière, en absorbant l'énergie de ce choc, afin de protéger les occupants du véhicule, assis sur les sièges de la troisième rangée.

De préférence également, les points de soudure qui relient entre elles chacune des ailes latérales de l'insert à l'une des deux ailes latérales du longeronnet sont situés chacun entre deux encoches voisines de l'insert.

Ces points de soudure permettent d'obtenir des liaisons entre le longeronnet et l'insert régulièrement réparties permettant à ceux-ci d'être déformés régulièrement en cas de choc, sans risque de séparation de l'insert par rapport au longeronnet.

L'insert peut être en tôle d'acier d'épaisseur comprise entre 0,5 et 1 mm, de sorte que la masse de l'insert ne dépasse pas 100 à 150 g.

Selon un autre aspect, l'invention concerne également un véhicule automobile comportant un plancher arrière de charge selon l'invention.

Dans une application préférée de l'invention, ce véhicule comporte un plancher arrière de charge selon l'invention pouvant supporter une troisième rangée de sièges.

D'autres particularités et avantages de l'invention apparaîtront encore tout au long de la description ci-après.

Aux dessins annexés, donnés à titre d'exemples, non limitatifs :
- la figure 1 représente en perspective un ensemble plancher arrière de charge et longeronnet selon l'invention,
- la figure 2 est une vue en perspective, à échelle agrandie, de la partie arrière du longeronnet selon l'invention, avant sa fixation au plancher représenté sur la figure 1,
- la figure 3 est une vue en coupe transversale du longeronnet représenté sur la figure 2, dans la zone où est située l'insert.

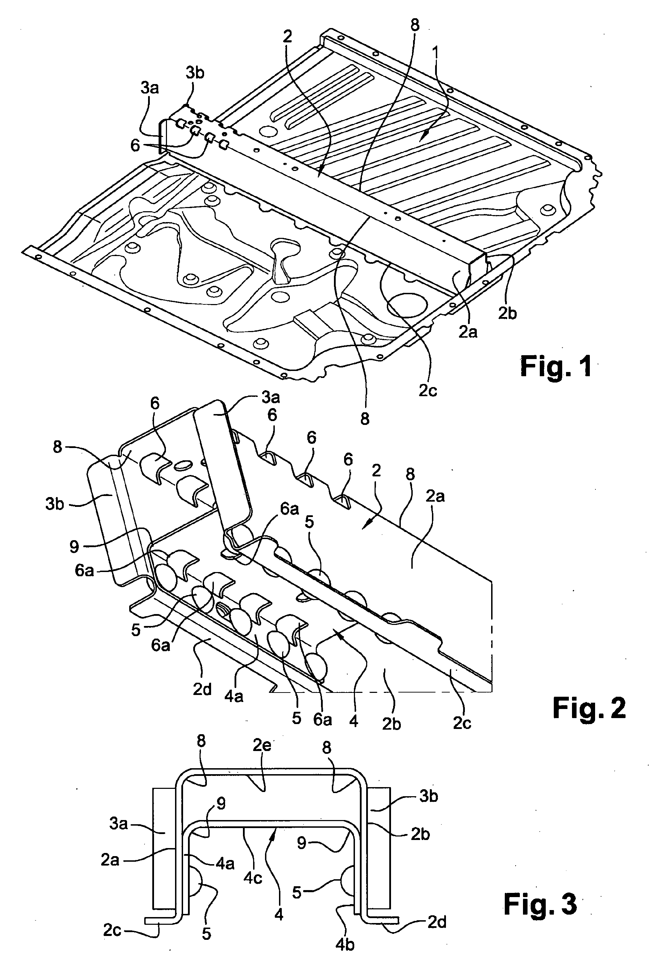

La figure 1 représente un plancher arrière de charge 1 prévu pour recevoir une troisième rangée de sièges (non représentés).

Ce plancher 1 est en matériau de faible densité, telle que matière plastique ou composite (matière plastique renforcée par des fibres).

Pour résister aux chocs arrière et pour supporter la troisième rangée de sièges avec les occupants assis sur ceux-ci, le plancher 1 est fixé à un longeronnet métallique 2, par exemple en tôle d'acier.

Ce longeronnet 2 s'étend au milieu du plancher 1 dans la direction de l'axe longitudinal du véhicule.

Le longeronnet 2 présente (voir figures 2 et 3) une section transversale en forme de U.

Les extrémités des deux ailes latérales 2a, 2b du longeronnet 2 comportent chacune un rebord plié 2c, 2d qui est lié au plancher 1 en matière plastique ou composite.

L'extrémité arrière du longeronnet 2 en tôle d'acier comporte deux pattes pliées 3a, 3b destinée à être soudées au panneau arrière (non représenté) du véhicule.

Conformément à l'invention, la partie arrière du longeronnet 2 est renforcée (voir figures 2 et 3) par un insert 4 en tôle d'acier de section transversale en U, engagé et fixé à l'intérieur du U formé par le longeronnet 2.

De plus, la partie arrière du longeronnet 2 et l'insert 4 comportent une série d'encoches 6.

Les figures 2 et 3 montrent que chacune des ailes latérales 4a, 4b du U formé par l'insert 4 est fixée au moyen de points de soudure 5 à l'une des ailes latérales 2a, 2b du U formé par le longeronnet 2.

Les figures 2 et 3 montrent également que le U formé par l'insert 4 est ouvert dans la même direction que le U formé par le longeronnet 2.

De plus, le fond 4c du U formé par l'insert 4 est espacé du fond 2e du U formé par le longeronnet 2.

Par ailleurs, la partie arrière du longeronnet 2 comporte une série d'encoches 6 espacées réalisées sur chacun des plis longitudinaux 8 compris entre une aile latérale 2a, 2b du U formé par le longeronnet 2 et le fond 2e de celui-ci.

La figure 2 montre de même que l'insert métallique 4 comporte sur toute sa longueur une série d'encoches 6a espacées réalisées sur chacun des deux plis 9 compris entre une aile latérale 4a, 4b du U formé par l'insert 4 et le fond 4c de celui-ci.

La figure 2 montre en outre que les points de soudure 5 qui relient entre elles chacune des ailes latérales 4a, 4b de l'insert 4 à l'une des deux ailes latérales 2a, 2b du longeronnet 2 sont situés chacun entre deux encoches 6a voisines de l'insert 4.

A titre d'exemple, l'insert 4 est embouti dans une tôle d'acier d'épaisseur comprise entre 0,5 et 1 mm.

Un tel insert 4 présente une masse comprise entre 50 et 100 g et de ce fait il n'augmente pas significativement la masse du longeronnet 2.

En cas de choc arrière, l'extrémité arrière du longeronnet 2 est soumise à une force de compression dirigée dans le sens de l'axe du longeronnet 2.

Grâce aux encoches 6 et 6a réalisées respectivement sur la partie arrière du longeronnet 2 et sur l'insert 4 situé dans cette partie arrière, l'ensemble constitué par cette partie arrière et par l'insert se déforme en se comprimant régulièrement suivant l'axe du longeronnet 2.

Cette déformation régulière permet d'absorber l'énergie du choc arrière de façon optimale tout en protégeant les occupants de la troisième rangée de sièges située devant la partie arrière du longeronnet 2 comportant l'insert 4 métallique.

Les encoches de cet insert métallique et celles du longeronnet permettent au véhicule de satisfaire la réglementation précitée en cas de choc arrière.

Par ailleurs, les véhicules équipés d'un longeronnet arrière renforcé par un tel insert métallique satisfont aux exigences de la réglementation ECE 14.

Dans une variante de réalisation de l'invention, l'insert métallique 4 est engagé sur l'extrémité arrière du longeronnet 2 au lieu d'être engagé dans cette extrémité arrière.

## Revendications

1. Plancher arrière de charge (1) pour véhicule automobile, ce plancher (1) étant réalisé en matière plastique ou en matière composite et comportant un longeronnet métallique (2) de section transversale en U s'étendant au milieu du plancher (1) dans le sens longitudinal du véhicule, les extrémités des deux ailes latérales (2a, 2b) du U formé par le longeronnet (2) étant reliées au plancher (1), **caractérisé en ce que** la partie arrière dudit longeronnet (2) est renforcée par un insert métallique (4) de section transversale en U, engagé et fixé à l'intérieur ou sur l'extérieur du U formé par ledit longeronnet (2), cette partie arrière du longeronnet (2) et/ou ledit insert métallique (4) comportant une série d'encoches (6).

2. Plancher arrière selon la revendication 1, **caractérisé en ce que** chacune des ailes latérales (4a, 4b) du U formé par l'insert métallique (4) est fixée au moyen de points de soudure (5) à l'une des ailes latérales (2a, 2b) du U formé par le longeronnet (2).

3. Plancher arrière selon la revendication 2, **caractérisé en ce que** le U formé par l'insert (4) est ouvert dans la même direction que le U formé par le longeronnet (2).

4. Plancher arrière selon l'une des revendications 2 ou 3, **caractérisé en ce que** le fond (4c) du U formé par l'insert (4) est espacé du fond (2e) du U formé par le longeronnet (2).

5. Plancher arrière selon l'une des revendications 1 à 4, **caractérisé en ce que** la partie arrière du longeronnet (2) comporte une série d'encoches (6) espacées réalisées sur chacun des deux plis (8) situés entre une aile latérale (2a, 2b) du U formé par le longeronnet (2) et le fond (2e) de celui-ci.

6. Plancher arrière selon la revendication 5, **caractérisé en ce que** ledit insert métallique (4) comporte sur toute sa longueur une série d'encoches (6a) espacées réalisées sur chacun des deux plis (9) situés entre une aile latérale (4a, 4b) du U formé par l'insert (4) et le fond (4c) de celui-ci.

7. Plancher arrière selon la revendication 2 et la revendication 5, **caractérisé en ce que** les points de soudure (5) qui relient entre elles chacune des ailes latérales (4a, 4b) de l'insert (4) à l'une des deux ailes latérales (2a, 2b) du longeronnet (2) sont situés chacun entre deux encoches voisines (6a) de l'insert (4).

8. Plancher arrière selon l'une des revendications 1 à 7, **caractérisé en ce que** l'insert (4) est en tôle d'acier d'épaisseur comprise entre 0,5 et 1 mm.

9. Véhicule automobile comportant un plancher arrière de charge (1) selon l'une des revendications 1 à 8.

10. Véhicule automobile selon la revendication 9, **caractérisé en ce que** ledit plancher arrière (1) supporte une troisième rangée de sièges.

## Patentansprüche

1. Gepäck-Heckraumboden (1) für ein Kraftfahrzeug, wobei dieser Boden (1) aus Kunststoff oder aus Verbundmaterial hergestellt ist und einen metallischen Längsträger (2) mit U-förmigem Querschnitt aufweist, der sich in der Mitte des Bodens (1) in Längsrichtung des Fahrzeugs erstreckt, wobei die Enden der zwei Seitenflügel (2a, 2b) des von dem Längsträger (2) gebildeten U mit dem Boden (1) verbunden sind, **dadurch gekennzeichnet, dass** der hintere Teil des Längsträgers (2) von einem metallischen Einsatz (4) mit U-förmigem Querschnitt verstärkt ist, der in das von dem Längsträger (2) gebildete U eingeführt und innen oder außen befestigt ist, wobei dieser hintere Teil des Längsträgers (2) und/oder der metallische Einsatz (4) eine Reihe von Schlitzen (6) aufweist.

2. Heckraumboden nach Anspruch 1, **dadurch gekennzeichnet, dass** jeder der Seitenflügel (4a, 4b) des von dem metallischen Einsatz (4) geformten U mit Hilfe von Schweißpunkten (5) an einem der Seitenflügel (2a, 2b) des von dem Längsträger (2) gebildeten U befestigt ist.

3. Heckraumboden nach Anspruch 2, **dadurch gekennzeichnet, dass** das von dem Einsatz (4) gebildete U in derselben Richtung wie das von dem Längsträger (2) gebildete U offen ist.

4. Heckraumboden nach einem der Ansprüche 2 oder 3, **dadurch gekennzeichnet, dass** der Grund (4c) des von dem Einsatz (4) gebildeten U vom Grund (2e) des von dem Längsträger (2) gebildeten U beabstandet ist.

5. Heckraumboden nach einem der Ansprüche 1 bis 4, **dadurch gekennzeichnet, dass** der hintere Teil des Längsträgers (2) eine Reihe beabstandeter Schlitze (6) aufweist, die auf jeder der zwei Falten (8) ausgearbeitet sind, die sich zwischen einem Seitenflügel (2a, 2b) des von dem Längsträger (2) gebildeten U und dem Grund (2e) desselben befinden.

6. Heckraumboden nach Anspruch 5, **dadurch gekennzeichnet, dass** der metallische Einsatz (4) über seine gesamte Länge eine Reihe beabstandeter Schlitze (6a) aufweist, die auf jeder der zwei Falten (9) ausgearbeitet sind, die sich zwischen einem Seitenflügel (4a, 4b) des von dem Einsatz (4) gebildeten U und dem Grund (4c) desselben befinden.

7. Heckraumboden nach Anspruch 2 und Anspruch 5, **dadurch gekennzeichnet, dass** sich die Schweißpunkte (5), die jeden der Seitenflügel (4a, 4b) des Einsatzes (4) mit einem der zwei Seitenflügel (2a, 2b) des Längsträgers (2) verbinden, jeweils zwischen zwei benachbarten Schlitzen (6a) des Einsatzes (4) befinden.

8. Heckraumboden nach einem der Ansprüche 1 bis 7, **dadurch gekennzeichnet, dass** der Einsatz (4) aus Stahlblech mit einer Dicke zwischen 0,5 und 1 mm inklusive ist.

9. Kraftfahrzeug, das einen Gepäck-Heckraumboden (1) nach einem der Ansprüche 1 bis 8 aufweist.

10. Kraftfahrzeug nach Anspruch 9, **dadurch gekennzeichnet, dass** der Heckraumboden (1) eine dritte Sitzreihe stützt.

## Claims

1. Floor (1) of a rear luggage compartment for a motor vehicle, said floor (1) being made from plastic material or composite material and comprising a metal beam (2) with a U-shaped cross-section extending along the middle of the floor (1) in the longitudinal direction of the vehicle, the ends of the two side wings (2a, 2b) of the U formed by the beam (2) being connected to the floor (1), **characterised in that** the rear portion of said beam (2) is reinforced by a metal insert (4) with a U-shaped cross-section, engaged and secured on the inside or outside of the U formed by said beam (2), this rear portion of the beam (2) and/or said metal insert (4) comprising a series of notches (6).

2. Rear floor according to claim 1, **characterised in that** each of the side wings (4a, 4b) of the U formed by the metal insert (4) is attached by means of welding spots (5) to one of the side wings (2a, 2b) of the U formed by the beam (2).

3. Rear floor according to claim 2, **characterised in that** the U formed by the insert (4) is open in the same direction as the U formed by the beam (2).

4. Rear floor according to one of claims 2 or 3, **characterised in that** the bottom (4c) of the U formed by the insert (4) is spaced out from the bottom (2e) of the U formed by the beam (2).

5. Rear floor according to one of claims 1 to 4, **characterised in that** the rear portion of the beam (2) comprises a series of notches (6) spaced at intervals, made in each of the two folds (8) located between a side wing (2a, 2b) of the U formed by the beam (2) and the bottom (2e) of the latter.

6. Rear floor according to claim 5, **characterised in that** said metal insert (4) comprises a series of notches (6a) spaced at intervals throughout its length, made in each of the two folds (9) located between a side wing (4a, 4b) of the U formed by the insert (4) and the bottom (4c) of the latter.

7. Rear floor according to claim 2 and claim 5, **characterised in that** the welding spots (5) that connect each of the side wings (4a, 4b) of the insert (4) to one of the two side wings (2a, 2b) of the beam (2) are each located between two adjacent notches (6a) of the insert (4).

8. Rear floor according to one of claims 1 to 7, **characterised in that** the insert (4) is made from steel sheeting with a thickness of between 0.5 and 1 mm.

9. Motor vehicle comprising a floor (1) of a rear luggage compartment according to one of claims 1 to 8.

10. Motor vehicle according to claim 9, **characterised in that** said rear floor (1) supports a third row of seats.
